# EUROPEAN PATENT APPLICATION

(11) **EP 4 197 981 A1**
(43) Date of publication of application: **21.06.2023**
(21) Application number: 21306778.8
(22) Date of filing: 15.12.2021
(51) Int. Cl.: C03C 17/34, C03C 17/36, C03C 23/00

(54) **GLAZING AND METHOD FOR MANUFACTURING THE SAME**

(71) Applicant: Saint-Gobain Glass France, 92400 Courbevoie (FR)
(72) Inventor: OLBRYCH, Sylwia, 52070 AACHEN (DE); LASFARGUES, Héloïse, 52074 AACHEN (DE); MOTEMANI SHARABIANI, Yahya, 52070 AACHEN (DE); HAGEN, Jan, 53123 BONN (DE)
(74) Representative: Saint-Gobain Recherche

(57) **Abstract**

The present invention relates to a glazing comprising a substrate coated with a coating comprising an uppermost dielectric layer, wherein said uppermost dielectric layer comprises at least 20 at.% of hafnium and at least 5 at.% of zirconium based on the total of metallic atoms, and optionally vanadium, as well as a process for manufacturing said glazing.

## Description

The present invention relates to a glazing comprising a protective layer for imparting scratch and/or wear resistance and a method for producing such glazing.

Glazing substrate, such as soda-lime glass or polymer substrates, are known to have poor scratch resistance properties. Coatings that are provided on glazing substrates for imparting specific functionalities (such as solar control, low-emissivity, electromagnetic shielding, heating, anti-condensation, anti-reflection, privacy, etc...) may also be sensitive to mechanical abrasion.

Improvement of scratch and/or wear resistance of glazings or functionalized glazings is typically addressed by providing a protective layer thereon. Such protective layer, also called "overcoat", is usually very thin. Either provided directly on a substrate or over a functional coating, they can be deposited using conventional thin layer deposition processes, such as sputtering process, in particular enhanced by a magnetic field, referred to in this case as the "magnetron" process.

Diamond like carbon (DLC) overcoats are well-known for increasing the scratch resistance of glazing systems. However, the main drawback of DLC is their intrinsic thermal instability. For this reason, DLC coatings are not suitable per se for application requiring exposure to high temperature such as tempering. Additional sacrificial layers must be provided for protecting the DLC coating during heat treatments (WO 2005/021454, WO 2019/020485). This solution however, in addition to complicating the manufacturing process, cannot completely avoid the degradation of the anti-scratch properties of the DLC coating.

Transition-metal oxides based overcoats, such as zirconium oxide based layers or titanium and zirconium oxide based layers, have also been used as protective layers (WO 2016/097557). Such overcoats can withstand thermal treatments and moderately improve the scratch resistance of glazing systems but they generally do not reach the anti-scratch performances of DLC coatings.

More recently, development of autonomous driving has further increased the requirements for scratch resistance for vehicle glazings such as windshields. Scratches that are invisible to human eyes can indeed affect the efficiency of camera systems mounted on windshields.

There is therefore a need for a protective coating that can improve scratch and/or wear resistance at similar or higher level than DLC coatings while being able to withstand thermal treatments. Applicant found that oxide layer comprising hafnium and zirconium, and optionally vanadium, in top of fulfilling those requirements, also provide good transparency in the visible range, which is particularly advantageous for glazing applications.

Accordingly, the present invention relates to a glazing comprising a substrate coated with a coating comprising an uppermost dielectric layer, wherein said uppermost dielectric layer comprises at least 20 at.% of hafnium and at least 5 at.% of zirconium based on the total of metallic atoms, and optionally vanadium.

The uppermost dielectric layer of the invention provides good scratch resistance properties. It can also tolerate heat treatments, which appears, contrary to DLC layers, to improve its scratch resistance properties. Accordingly, the coating of the invention is advantageously submitted to heat treatment, such as tempering, bending or annealing using laser radiation, flash lamp or infrared lamps.

The substrate is preferably a glass substrate or polymeric substrate, such as polycarbonate. It is preferably transparent, colorless or colored, for example blue, green, gray or bronze. The thickness of the substrate generally varies between 0.7 mm and 19 mm, preferably between 1 and 10 mm, in particular between 2 and 68 mm, and even between 2 and 4 mm. The substrate can be flat or bent. The substrate has typically a light transmission of at least 30%.

The glass is preferably of soda-lime-silica type but it can also be a glass of borosilicate or alumino-borosilicate type. The glass substrate is preferably of the float glass type, that is to say capable of having been obtained by a process which consists in pouring the molten glass onto a bath of molten tin ("float" bath). The glass substrate can also be obtained by rolling between two rolls, a technique which makes it possible in particular to print patterns at the surface of the glass. The glass substrate may be tempered glass.

The glass substrate can be a colored glass. Accordingly, the glass substrate preferably comprises coloring agents, with the following weight contents: Fe₂O₃ (total iron) from 1.2 to 2.3%, in particular from 1.5 to 2.2%, CoO from 50 to 400 ppm, in particular from 200 to 350 ppm, Se from 0 to 35 ppm, in particular from 10 to 30 ppm. The redox is preferably from 0.1 to 0.4, more preferably from 0,2 to 0,3. The redox is defined by the weight ratio of ferrous iron (expressed as FeO) to total iron (expressed as Fe₂O₃). In another embodiment, the glass comprises only iron oxide as coloring agent in a weight content as follows: Fe₂O₃ (total iron) from 0.1 to 1.1%, in particular from 0.5 to 1.0%. The redox is preferably from 0.1 to 0.4.

Alternatively, the glass substrate can be a clear or extra-clear glass. The term "clear glass" is understood to mean a soda-lime-silica glass obtained by floating which is not coated with layers and which exhibits a light transmission of the order of 90%, a light reflection of the order of 8% and an energy transmission of the order of 87%, for a thickness of 4 mm. The light and energy transmissions and reflections are as defined by the standard NF EN 410. Typical clear glasses are, for example, sold under the name SGG PlaniClear by Saint-Gobain Glass France or under the name Planibel Clair by AGC Flat Glass Europe. These substrates are conventionally employed in the manufacture of vehicle glazings.

The uppermost dielectric layer is provided on the substrate. It has typically a thickness from 2 to 100 nm, preferably from 5 to 60 nm, or to 40nm, or even to 20 nm. In a first embodiment, the uppermost dielectric layer may be in direct contact with the substrate. Alternatively, an adhesion layer or a barrier layer may be provided between the substrate and the uppermost dielectric layer. In other embodiments, a functional stack may be provided between the substrate and the uppermost dielectric layer. In any case, the uppermost dielectric layer is the last layer of the coating and in direct contact with the atmosphere.

In the context of the present invention, the terms "below" and "above" associated with the position of two elements A and B (e.g. a layer, a coating or a substrate) do not rule out the presence of other elements between said elements A and B. In particular, when related to the position of a layer with respect to another, it means that the first layer is closer to, respectively further from, the substrate than the other. On the contrary, an element A "in direct contact" with an element B means that no other element is positioned between these. It is the same for the expressions "directly on" and "directly under". Thus, it is understood that, unless it is indicated otherwise, other elements may be inserted between each of the elements.

The expression "dielectric layer" within the meaning of the present invention refers to a nonmetallic layer, in other words a layer which does not consist of metal. This expression refers in particular to a layer consisting of a material having a ratio n/k (n = refractive index; k = extinction coefficient) over the whole visible range (from 380 nm to 780 nm) which is equal to or greater than 5.

The uppermost dielectric layer is preferably an oxide, nitride or oxynitride layer, more preferably an oxide layer.

The uppermost dielectric layer comprises at least 20 at.%, preferably 20 to 90 at.%, more preferably 45 to 80 at.%, of hafnium and at least 5 at.%, preferably 5 to 55 at.%, more preferably 10 to 35 at.%, of zirconium, and optionally vanadium, preferably in an amount of 0 to 30 at.%, more preferably 1 to 30 at.%, or even 5 to 30 at.%, the percentages being based on the total of metallic atoms in the uppermost dielectric layer. Hafnium, zirconium and vanadium represent typically more than 50 at.%, preferably more than 70 at.%, more preferably more than 90 at.% of the total metallic atoms in the uppermost dielectric layer.

The coating of the invention may comprise an adhesion layer or barrier layer between the substrate and the uppermost dielectric layer. The adhesion layer or barrier layer is preferably in direct contact with the substrate and the uppermost dielectric layer. It may be based on silicon oxide, silicon nitride or silicon oxynitride. Its thickness is typically from 5 to 80 nm, preferably from 10 to 50 nm.

The coating of the invention may comprise a functional stack between the substrate and the uppermost dielectric layer. The functional stack may provide specific properties to the article of the invention such as solar control, low-emissivity, electromagnetic shielding, heating, anti-condensation, anti-reflection or privacy properties. In one particular embodiment, the functional stack may be a solar-control or low-emissivity coating. It may comprise a functional layer selected from infrared reflecting metal layers, such as a silver layer, or a transparent conductive oxide, such as indium tin oxide (ITO). The functional layer is preferably provided between at least two dielectric layers. The dielectric layers are typically based on silicon oxide, nitride or oxynitride, titanium oxide, zinc oxide, zirconium oxide or mixtures thereof.

The expression "based on" when referring to the composition of a layer means that said layer comprises at least 80% by weight of the specified material. Other embodiments have more than 90%, such as more than 95% by weight of said material. Said layer may be essentially made of said material, i.e. comprising more than 99% of said material. The expression "made of' when referring to the composition of a layer means that said layer comprises only said material and inevitable impurities.

The glazing of the present invention can be a building glazing or a vehicle glazing, e.g. for cars, trucks, trains... The glazing may be a single (monolithic) glazing, a multiple (in particular double or triple) glazing or a laminated glazing. It may be tempered or bent. The coating according to the present invention is generally positioned on the external faces of the glazing (either toward indoor and/or toward outdoor). The glazing is preferably a vehicle glazing, such as a windshield, a sidelite or a sunroof of a vehicle, wherein the coating is on the side exposed to external environment.

The glazing of the present invention has typically a light transmission of at least 30%, preferably at least 50% or even at least 70%.

In a particular embodiment, the glazing of the present invention is a laminated glazing comprising a first glass substrate, in particular intended to be on positioned on the external side of a vehicle, having an external surface F1 and a connecting surface F2, a second glass substrate, in particular intended to be positioned at the inner side of a vehicle, having a connecting surface F3 and an internal surface F4, and a laminating layer between the first and second glass substrates, wherein the first glass substrate is coated with the coating of the invention on its external surface F1. The second glass substrate may be similar to or different from the first glass substrate. The second glass substrate is preferably of soda-lime-silica type but it can also be a glass of borosilicate or alumino-borosilicate type. It can be clear or colored. It has typically a thickness from 0,5 to 4 mm, preferably from 1 to 3 mm.

The laminating layer is in contact, preferably in direct contact, with the connecting surface of the first glass substrate F2 and of the second glass substrate F3. The laminating layer is typically a polymeric layer comprising at least one layer, such as a polyvinylacetal layer, in particular polyvinylbutyral (PVB). It preferably consists of such PVB layers. It can be colorless or colored, in particular for adapting the optical and/or thermal properties of the glazing if needed.

The laminating layer can advantageously have sound absorption properties for absorbing air-borne and/or structure-borne sounds. It can for instance comprise three polymeric layers including two external polymeric layers, preferably PVB layers, and one internal polymeric layer, optionally also a PVB layer, between the two external layers, wherein the internal layer has a lower hardness than the external layers.

The laminating layer can also have heat insulation properties, in particular by reflecting infrared radiations. In particular, it may comprise a low emissivity (low-e) coating, e.g. a coating comprising a silver layer or a coating comprising a succession of alternating dielectric layers having low refractive index and high refractive index. The low-e coting can be deposited on a polyethylene terephtalate (PET) layer sandwiched between two PVB layers.

The laminating layer has typically a thickness from 0,3 to 1,5 mm, preferably from 0,5 to 1 mm. The laminating layer can have a lower thickness on one side of the glazing compared to the center of the glazing in order to avoid ghost image when using a head-up display (HUD) system.

The glazing of the present invention preferably comprises at least one sensor, typically positioned on the internal side of the glazing, i.e. the internal surface F4 of a laminated glazing s defined above. Said at least one sensor can be a camera (e.g. in the visible wavelength and/or infrared wavelength range, in particular near infrared or thermal infrared) or a Lidar.

The present invention also relates to a process for manufacturing a glazing as defined above, comprising providing a glazing substrate and depositing a coating comprising an uppermost dielectric layer on said substrate resulting in a coated substrate, wherein said uppermost dielectric layer comprises at least 20 at.% of hafnium and at least 5 at.% of zirconium based on the total of metallic atoms, and optionally vanadium.

The present invention also relates to a process for protecting (i.e. improving its scratch resistance) an article, in particular comprising a glass or polymeric substrate, comprising depositing a coating comprising an uppermost dielectric layer on said substrate, wherein said uppermost dielectric layer comprises at least 20 at.% of hafnium and at least 5 at.% of zirconium based on the total of metallic atoms, and optionally vanadium. Similarly, the present invention also relates to the use of an uppermost dielectric layer for improving the scratch resistance of an article, in particular comprising a glass or polymeric substrate, wherein said uppermost dielectric layer comprises at least 20 at.% of hafnium and at least 5 at.% of zirconium based on the total of metallic atoms, and optionally vanadium.

The uppermost dielectric layer may be deposited on the substrate by sputtering method, in particular using magnetic-field-assisted cathode sputtering process ("magnetron" process). When the coating comprises other layers, such as a barrier or adhesion layer, or a functional stack, the whole coating is advantageously deposited by sputtering method. The sputtering may be a reactive sputtering using metallic target in oxidative and/or nitriding atmosphere. Alternatively, oxide, nitride or oxynitride targets having the same composition as the uppermost dielectric layer can be used for depositing the uppermost dielectric layer.

The uppermost dielectric layer of the present invention can withstand heat treatment. Its scratch resistance properties even appear to be improved by heat treatments. The process of the present invention thus advantageously includes a heat treatment step subsequent to the deposition of the coating. The heat treatment can be selected from tempering, bending or annealing.

In a first embodiment, the heat treatment step may be a tempering step, particularly in the case of a glass substrate. Tempering is typically performed at temperatures from 550 to 750°C for few minutes such as 3 to 30 minutes.

In another embodiment, the heat treatment may be a bending step, particularly in the case of a glass substrate. Bending can be performed by gravity (the glass substrate deforming under its own weight) or by pressing, at temperatures typically from 550 to 650°C. When the glazing comprises at least two glass substrates, such as for laminated glazings, the glass substrates can be bend separately. Preferably, the two glass substrates are bend together. In such a case, a separating powder, such as calcium and/or magnesium carbonate, can be introduced between the two glass substrates during the bending in order to keep the two substrates separated from each other by creating a space, typically from 20 to 50 µm wide. During the bending step, the second glass substrate, generally intended to be positioned at the inner side of a vehicle, is typically placed on the first glass substrate.

In a further embodiment, the heat treatment step may be an annealing step, in particular rapid annealing methods using laser, flash lamps or infrared lamps. Such methods are particularly adapted for improving the properties of functional coatings, e.g. crystallizing infrared reflective layers, by heating the functional coating typically at temperatures from 200 to 600°C for few seconds, or even less than 1 second, without heating the substrate. It is thus adapted to glass substrates as well as polymeric substrates.

The present invention is illustrated by the following non-limitative examples.

Oxide layers comprising different proportions of hafnium, zirconium and vanadium are deposited on Planiclear^{®} glass substrates by magnetron sputtering using co-sputtering of three metallic targets in an oxidative Ar-O₂ atmosphere under a pressure from 3.0e10⁻³ to 5.0e10⁻³mbar.

The scratch resistance of the oxide layers is measured after tempering at 640°C for 8 minutes and few days of exposure to ambient atmosphere.

Scratch resistance test: a side of borosilicate bead piece is slid manually on the surface of the sample. One single run is performed for a distance of about 10 mm with a constant load. All the scratch tests are performed and evaluated by a single trained technician in order to ensure repeatability. The scratch resistance is rated based on the resulting scratch marks observed by microscope: ⊗ extremely visible scratch marks; ⌀ moderately visible scratch marks; ○ very slightly visible scratch marks; ⊙ no visible scratch marks.

For comparison, similar scratch test is performed on uncoated Planiclear^{®} substrate (C0), and Planiclear^{®} substrate coated with DLC layer (C1) and hafnium oxide layer (C2). The results of the scratch tests are summarized in table 1.

**[Table 1]**

| Example | Uppermost layer | Scratch resistance |
|---|---|---|
| C0 | - | ⓧ |
| C1 | DLC | ⌀ |
| C2 | HfOₓ | ⓧ |
| I1 | Hf_{0,85}Zr_{0,15}Oₓ | ⊙ |
| 12 | Hf_{0,85}Zr_{0,10}V_{0,05}Oₓ | ⊙ |
| 13 | Hf_{0,70}Zr_{0,20}V_{0,10}Oₓ | ⊙ |
| 14 | Hf_{0,50}Zr_{0,13}V_{0,7}Oₓ | ⌀ |
| 15 | Hf_{0,55}Zr_{0,15}V_{0,30}Oₓ | ○ |
| 16 | Hf_{0,55}Zr_{0,30}V_{0,15}Oₓ | ⊙ |
| 17 | Hf_{0,40}Zr_{0,35}V_{0,25}Oₓ | ⊙ |
| 18 | Hf_{0,30}Zr_{0,50}V_{0,20}O_{X} | ⊙ |
| 19 | Hf_{0,25}Zr_{0,40}V_{0,35}Oₓ | ⌀ |
| I10 | Hf_{0,25}Zr_{0,60}V_{0,15}Oₓ | ⌀ |

As shown in table 1, all examples I1 to I10 according to the invention have better scratch resistance than the uncoated substrate. 11-13 and 15-18 have even better scratch resistance than the example C1 comprising a DLC layer. In addition, the oxide layers of examples 11-13 and 16-18 have excellent transparency and neutral color which remain very similar after tempering.

## Claims

1. A glazing comprising a substrate coated with a coating comprising an uppermost dielectric layer, wherein said uppermost dielectric layer comprises at least 20 at.% of hafnium and at least 5 at.% of zirconium based on the total of metallic atoms, and optionally vanadium.

2. Glazing according to one claim 1, wherein the uppermost dielectric layer comprises 20 to 90 at.%, preferably 45 to 80 at.%, of hafnium based on the total of metallic atoms.

3. Glazing according to claim 1 or 2, wherein the uppermost dielectric layer comprises 5 to 55 at.%, preferably 10 to 35 at.%, of zirconium based on the total of metallic atoms.

4. Glazing according to one of claims 1 to 3, wherein the uppermost dielectric layer comprises 0 to 30 at.%, preferably 1 to 30 at.%, of vanadium based on the total of metallic atoms.

5. Glazing according to one of claims 1 to 4, wherein hafnium, zirconium and vanadium represent more than 50 at.%, preferably more than 70 at.%, more preferably more than 90 at.% of the total metallic atoms in the uppermost dielectric layer.

6. Glazing according to one of claims 1 to 5, wherein the uppermost dielectric layer has a thickness from 2 to 100 nm, preferably from 5 to 20 nm.

7. Glazing according to one of claims 1 to 6, wherein the uppermost dielectric layer is an oxide, nitride or oxynitride layer, preferably an oxide layer.

8. Glazing according to one of claims 1 to 7, wherein the coating comprises an adhesion layer or an alkaline barrier layer between the substrate and the uppermost dielectric layer.

9. Glazing according to one of claims 1 to 8, wherein the coating comprises a functional stack between the substrate and the uppermost dielectric layer, said functional stack preferably comprising a functional layer selected from infrared reflective metal layers, such as silver layer, and transparent conductive oxide layers, such as ITO layer.

10. Glazing according to one of claims 1 to 9, wherein the coating is submitted to heat treatment.

11. Glazing according to one of claims 1 to 10, wherein the substrate is a glass substrate or a polymeric substrate, such as polycarbonate.

12. Glazing according to one of claims 1 to 11, wherein said glazing comprises a camera system associated with the coated substrate.

13. Use of a glazing as defined in claims 1 to 12 as a vehicle glazing, such as a windshield, a sidelite or a sunroof of a vehicle, wherein the coating is on the side exposed to external environment.

14. A process for manufacturing the glazing as defined in to claims 1 to 12, comprising providing a glazing substrate and depositing, preferably by sputtering, a coating comprising an uppermost dielectric layer on said substrate resulting in a coated susbtrate, wherein said uppermost dielectric layer comprises at least 20 at.% of hafnium and at least 5 at.% of zirconium based on the total of metallic atoms, and optionally vanadium.

15. Process according to claim 14, wherein the coated substrate is submitted to a heat treatment such as bending or tempering.
